# EUROPEAN PATENT APPLICATION

(11) **EP 2 042 042 A1**
(43) Date of publication of application: **01.04.2009**
(21) Application number: 08386021.3
(22) Date of filing: 09.09.2008
(51) Int. Cl.: A23L 1/164, A23L 1/217, A21D 13/00

(54) **Snack based on cheese and potato starch**

(30) Priority: 17.09.2007 GR 20070100568
(71) Applicant: UNISMACK INDUSTRIAL AND COMMERCIAL SOCIETE ANONYME OF FOODS, 100 Stavrochori (GR)
(72) Inventor: Stratakis, Georgios, 55132 Kalamaria (GR)
(74) Representative: Masoulas, Athanasios V.

(57) **Abstract**

Snack food with raised walls (inflated) based on cheese and potato starch, produced by a special forming of dough (forming of a sheet), baking in the oven and packaging it in a protected atmosphere.
Solid food of snack type produced by a combination of mechanical parts constructed for the food industry. A product with ideal crisp taste due to its final humidity and fats, coloured by natural methods (addition of milk whey and taste materials), and finally produced by the addition of 53% and with an acceptable proportion of 30-60% Edam cheese, Gouda cheese or other yellow processed cheeses with 36% to 48% fats. It is designed as an aliment for consuming it during any time of the day and in any quantity without side-effects.

## Description

The present invention concerns a stable solid food of snack type based on Edam cheese, Gouda cheese, any other yellow processed cheese with 36%-48% fats, and natural potato starch, produced by shaping of dough (sheet-like shaping), baking in the oven and packaging in a protective atmosphere. Specifically, the present invention concerns a stable solid food of triangular form with dimensions 30 to 40 mm in its base, 35 to 45 mm in its sides and walls rising (inflated) in the center of the triangular form. The present form of the snack has been fixed by choice and it must be noted that the invention can comprise any product form within its production frame. An important characteristic of the product is its special crisp taste and the intense aroma of the Edam cheese, the Gouda cheese and the other yellow processed cheese with 36%-48% fats. It is a product baked in the oven and packaged in a protective atmosphere. These special characteristics are derived from the combination of the components of Edam cheese, Gouda cheese, and other yellow processed cheese with 36%-48% fats, potato starch, yeast extract in powder form, fine cooking salt, egg yolk, natural aroma of Edam cheese, Gouda, other yellow processed cheese with 36%-48% fats and natural tastes in accordance with the taste we wish to give to the final product (paprika, tomato, olive, origanum, onion, garlic, spinach etc). The thermal processing of the above components leads to the dough preparation from which results in the solid food after cooking.

### PREVIOUS TECHNICAL STATE

There is no other similar product in the world market. In a small market of France a resembling snack has been promoted, but on Emmental cheese base. This snack did also not contain yeast extract, egg yolk and natural cheese aroma or any other natural aroma, while it contained many preservatives, as E452 (sodium polyphosphate), E331 (trisodium citrate), E339 (sodium phosphate) in powder form, and butter. Also no taste as secondary or tertiary product had resulted. Finally, the baking of this snack had been done in an electric oven and the final product had no raised walls, as the snack described in this invention. The production processing and the recipe of the described snack are unique and constitute an innovate idea in the region of the world snack production. The snack described in the present invention is diversified and improved in relation to the above mentioned snack, because it offers a different final humidity which does not allow it to crush, has raised walls, contains the above ingredients, the properties of which give a superior nourishing value and is produced by a new production process, with the help of machines designed only for its production.

### DESCRIPTION OF THE INVENTION

The mechanical parts which participate in the production process are the following:
- Stainless cutter with a revolving stainless bucket.
- Stainless kneader with bucket, revolving stirrer, automatic steam supply during the kneading, automatic sealing of the bucket and possibility of creating a kneading program (choice of time and stirring velocity).
- Rolling belt for the dough laying.
- Pairs of cylinders (rolls) of stainless steel with Teflon coating) (former - 1), with possibility of temperature regulation of the cylinders (40°C for the specific product), possibility of regulating their velocity (0,67 m/min) and possibility of regulating their mutual distance (3,4 mm).
- Rolling belt-2 with possibility of regulating its velocity.
- Pair of cylinders (former-2) with the same characteristics of the former-1.
- Rolling belt-3 with possibility of regulating its velocity.
- Rolling belt-4 with possibility of regulating its velocity.
- Cutter engraved with the special form of the final product (triangular or other) and possibility of regulating its revolving velocity.
- Oven with regulation possibility of temperatures and baking time.
- Cooling line.
- Packaging machines with weighing means and possibility of weighing with gram accuracy.

All mechanical parts have been designed for the production of the items described here, and are unique worldwide for their combination and final result achieved.

The present invention concerns the mixing in powder form of the following ingredients: Natural potato starch, yeast extract, salt and egg yolk. For the production of other tastes natural tastes and aromas are added to the above ingredients, in accordance to the final result we wish to achieve, as natural paprica, tomato and olive paste etc. The Edam cheese is cut into pieces in the cutter and then the above powders are added to the same cutter. The cutting operation is continued up to the good mixing of the ingredients and the creation of the fragments (finally fragmented materials). The same procedure is followed when instead of Edam cheese, Gouda cheese or other yellow processed cheese with 36%-48% fats are used. The mixture is placed in the stainless bucket which is part of the kneading machine. Prior to the kneading stage and into the bucket desalted and dionizated water (2,5 It) is manually introduced, within which the natural aroma of the Edam cheese has been diluted. After the introduction of the water the bucket is placed in the kneading device, which seals the bucket after being elevated. This device is provided with stirrers which help the stirring of the dough. The stirring lasts 3,5 minutes and the stirrers velocity is 100 revolutions per min. in reverse direction. During this, dry steam of 150°C is provided. The acceptable steam temperature can be 110°C to 180°C (Celsius). The steam melts the cheese which is the basic ingredient (53% or within the lower acceptable limits) and is mixing all the materials until a uniform mass (dough) is created having a temperature of 60°C. The acceptable dough temperature is 50°C to 70°C. The quantity of the steam provided for rising the temperature to this level is 4,5 It. The acceptable quantity of steam is 3 lt. to 7 It. After a time period of 3,5 minutes, the supply of steam stops and the bucket is taken out of the kneading device after being lowered. Within the limits of temperature, steam supply and steam temperature, the kneading can last 2 to 6 minutes.

The dough is placed on the rolling belt which leads it to a cylindrical former. The former gives a dough sheet with 3,4 mm thickness and 1,5 mm width to a second rolling belt which leads this sheet to a second cylindrical former. (The acceptable dimensions can be fixed to 2 mm to 4 mm thickness and 0,5 to 2,0 meters width). The second former gives a sheet of 1,2 mm thickness and 1,5 m width to a third rolling belt. (The acceptable thickness and width can be fixed to 0,8 mm to 2 mm thickness and 0,5 m to 2,0 m width). The belt leads the sheet to a forth rolling belt over which a contacting cutter engraved with the triangular shaped form of the product is rotating. The same belt enters (transports) the dough cut to pieces to the rolling belt (chain) of the oven. The 22 meters long oven (natural gas) bakes the product in two zones within 6 minutes. (The oven can have a length of 5 to 30 meters and give the same baking results within 2 to 10 minutes). The first zone gives temperatures in the order of 160°C while the second zone gives a temperature of 200°C. the raising of the walls of dough cut to pieces is achieved by these temperatures and so the solid food which has been described is being delivered. The temperatures in the first zone can vary from 120 to 200°C and in the second zone from 180 to 230°C. This fact depends on how much dehydration we want to give to the final product without destroying it (burning).

As the product is taken out of the oven the temperature starts diminishing when it is placed over the rolling belts. The belts used are 8 with a total length of 60 meters and the last one sets the product on the two packaging machines. The automatic operation system of the packaging machines allows the weighing with gram accuracy. Finally, during the packaging a mixture of nitrogen and carbon dioxide is introduced in it in a 70/30 ratio, and in this way the protective atmosphere is achieved, which fact contributes to the expectancy of a 6 months life (preservation time) as mentioned before. The packaging machines which can be used can be more or less numerous in accordance with the production needs. The ratio between nitrogen and carbon dioxide could be even 80/20. The choice of the 70/30 ratio is based on the fact that a greater quantity of carbon dioxide prevents the decomposition of the product in a greater degree.

Here below the exact recipe of the snack described is presented in all three tastes produced, as well as by using Gouda cheese instead of Edam cheese, or other yellow processed cheese with 36% to 48% fats.

### Basic Taste with Edam

| | | |
|---|---|---|
| Edam Cheese | - | 33,2 Kg |
| Natural potato starch | - | 22,69 Kg |
| Yeast extract in powder form | - | 0,560 Kg |
| Fine salt | - | 0,4 Kg |
| Egg yolk | - | 0,7 Kg |
| Natural Edam aroma | - | 0,05 Kg |

### Paprica Taste with Edam

| | | |
|---|---|---|
| Edam cheese | - | 32,16 Kg |
| Natural potato starch | - | 21,99 Kg |
| Yeast extract in powder form | - | 0,560 Kg |
| Fine salt | - | 0,26 Kg |
| Egg yolk | - | 0,7 Kg |
| Natural Edam aroma | - | 0,05 Kg |
| Natural Paprica taste | - | 2,0 Kg |

### Taste of Tomato - Olive - Origanum with Edam

| | | |
|---|---|---|
| Edam cheese | - | 32,16 Kg |
| Natural potato starch | - | 21,99 Kg |
| Yeast extract in powder form | - | 0,560 Kg |
| Egg yolk | - | 0,7 Kg |
| Natural Edam aroma | - | 0,05 Kg |
| Natural tomato - olive taste | - | 1,2 Kg |
| Natural origanum taste | - | 0,8 Kg |

### Basic Taste with Gouda

| | | |
|---|---|---|
| Gouda Cheese | - | 31,8 Kg |
| Natural potato starch | - | 22,69 Kg |
| Fine salt | - | 0,337 Kg |
| Egg yolk | - | 0,7 Kg |
| Natural Gouda aroma | - | 0,05 Kg |

### Paprica Taste with Gouda

| | | |
|---|---|---|
| Gouda cheese | - | 30,9 Kg |
| Natural potato starch | - | 21,99 Kg |
| Fine salt | - | 0,197 Kg |
| Egg yolk | - | 0,7 Kg |
| Natural Gouda aroma | - | 0,05 Kg |
| Natural Paprica taste | - | 2,0 Kg |

### Taste of Tomato - Olive - Origanum with Gouda

| | | |
|---|---|---|
| Gouda cheese | - | 30,9 Kg |
| Natural potato starch | - | 21,99 Kg |
| Yeast extract in powder form | - | 0,560 Kg |
| Egg yolk | - | 0,7 Kg |
| Natural Gouda aroma | - | 0,05 Kg |
| Natural tomato - olive taste | - | 1,2 Kg |
| Natural origanum taste | - | 0,8 Kg |

The acceptable limits of certain materials within which the same (or equivalent) results can be achieved are the following:

| | | |
|---|---|---|
| Edam or Gouda Cheese or other processed yellow cheese with 36% to 48% fats | - | 30 to 60% |
| Natural potato starch | - | 20 to 45% |
| Yeast extract in powder form | - | 0,5 to 4% |
| Fine salt | - | 0 to 3% |
| Natural Edam or Gouda aroma or other yellow processed cheese with 36% to 48% fats | - | 0 to 1% |
| Natural paprica taste | - | 1 to 5% |
| Natural tomato - olive taste | - | 1 to 5% |
| Natural origanum taste | - | 1 to 5% |
| Other natural tastes | - | 1 to 5% |
| Egg yolk | - | 1 to 5% |

The Edam cheese belongs to the category of yellow cheeses. It has a light moderate taste without strong salinity and almost without aroma. It has a high content in calcium and fat, which facilitates the absorption of calcium from the human body. Its humidity is 46% and its fat matters on dry condition are 40%. Gouda cheese has the same properties and characteristics with the Edam cheese with the only difference that its humidity is 42% and its fat matters are 48%. For this reason at its use the addition of butter is omitted and the proportion of its use is lowered. Similar properties have the other yellow processed cheeses with 36% to 48% fats. In the previous solid food mentioned before (previous technology) Emmental cheese was used which has a 40% humidity and 48% fat matters in dry condition. At the same time there was an addition of butter which, in combination with the fats of the Emmental cheese, augmented considerably the fat of the final product. This ended in that the solid final food was easily crushed and the final consumer would eat the product in fragments and not in its initial triangular form.

Starch is a cereals product and one of the main constituants of the contemporary nourishment. It is widely used in natural and in modified form, as a source of carbohydrates, as coagulant, stabilizer and bonding element. Its most important sources are by order corn, wheat and potato. Besides these, rice starch, barley starch and sweet potato corn are known for their applications. The starch forms furnished for food production, as well as for industrial and pharmaceutical uses, are the normal pregelatinized, cationic starch and the modified starch. At the preparation of the food starch (snack) described, the normal natural potato starch is used, which is taken by the industrial treatment of potatoes by natural methods and serves in the snack described with its properties as a source of carbohydrates, as a coagulant, a stabilizer and a bonding element. It constitutes an innovator material in the snack industry with its basic advantage that it does not contain gluten as the wheat and corn starches. It has long preservation time expectancy and can be stored in a shadow surrounding, without danger, during great temperature variations.

The yeast extract in powder form acts as taste promoter, further offering salinity and coherence of the materials. It homogenizes considerably the materials and gives a tight structure to the dough. With the present material the natural substitution of the sodium glutamate takes place naturally, which material is an additive and helps considerably the taste reinforcement. The previous solid food mentioned did not use this specific material and also sodium glutamate in any form. This resulted in a neutrality of its taste and in lack of salinity. Also, the coherence of the dough was not achieved resulting to the incorrect further treatment of the dough.

The natural taste of the Edam cheese, of the Gouda cheese and of the other yellow processed cheese with 36% to 48% fats acts as a taste strengthening material, giving a special direction towards the cheese, and it also strengthens the aroma of the product. It is received by natural industrial methods, fact which makes it strong in its properties, and for this reason it is used in very small quantities as mentioned before. In the previous (old) solid food mentioned, there was no addition of any natural aroma, and this made it again weak in its final taste and did not offer any aroma. This last property resulted in that when its packaging was opened, there was no pleasant smell of a tasty food.

The fine salt acts mainly for increasing the salinity of the product but also for a better homogenization of the dough.

The natural taste of tomato-olive constitutes a mixture of dry tomatoes and olives in equal percentage, and after the industrial treatment, monosodium glutamate is added which acts as taste reinforcement. In the natural taste of tomato-olive a natural taste of origanum is added, which is obtained by the same industrial methods. In the same frame the natural paprica taste and the other natural tastes mentioned before are used. All these products are used in powder form and are added during the mixing of the dry materials of the product.

## Claims

1. Snack food with rising walls (inflated), based on cheese and potato starch and on a mixture of additives, aromas and taste materials.

2. Snack in accordance with claim 1 produced by a special formation of dough (sheet shaping), baking in the oven and packaging in a protected atmosphere.

3. Snack in accordance with claims (1) and (2) in different shapes, preferable in triangular shape, with dimensions of the triangular form 30 to 40 mm base, 35 to 45 mm sides and with walls rising (inflating) in the center of the triangular form.

4. Snack in accordance with claims (1), (2) and (3), **characterized by** the combination (recipe) of the ingredients: Edam cheese, Gouda cheese and the other yellow processed cheeses with 36% to 48% fats in 53% proportion (ratio), and in acceptable proportion of 30% to 60%, of potato starch, yeast extract in powder form, fine cooking salt, natural aroma of Edam cheese, Gouda cheese and other yellow processed cheeses with 36% to 48% fats, egg yolk, natural paprica taste, natural tomato - olive taste, natural origanum taste or other natural tastes.

5. Method for producing the product of claims (1), (2), (3) and (4), based on the thermal treatment of its ingredients by using steam, by forming of dough under stable temperature of 60°C (with acceptable temperature of 50 to 70°c), shaping of the dough (sheet shaping), baking in the oven and packaging in a protected atmosphere, and **characterized by** the fragmentation of the recipe materials and the creation of a fragmented body, by the exact addition of dry steam for forming of the dough under stable temperature, by taking the dough sheet in a very thin condition of 3,4 mm and 1,2 mm out of the two formers (with acceptable limit 2 mm to 4 mm and 0,8 mm to 2,0 mm), by cutting this sheet into a certain shape (triangular), which can be any other shape within the frames of snack production, by a uniform baking within certain temperatures and also by its packaging in a protected atmosphere with fixed proportion of nitrogen and carbon dioxide.
